# EUROPEAN PATENT APPLICATION

(11) **EP 1 286 524 A1**
(43) Date of publication of application: **26.02.2003**
(21) Application number: 01120156.3
(22) Date of filing: 22.08.2001
(51) Int. Cl.: H04M 3/523, H04M 3/53, H04M 3/42

(54) **Generating a message record of a conversation between telephone agents and transmitting information regarding the message record to a telephone agent who has requested it**

(71) Applicant: SIEMENS AKTIENGESELLSCHAFT, 80333 München (DE)
(72) Inventor: Mateu, Jordi, 17520 Puigcerda (ES)

(57) **Abstract**

Method and telephone agent system for generating a message record of at least a part of a conversation between telephone agents and for transmitting information regarding the message record to the telephone agent who has requested it.

The present invention comprises a method and a telephone agent system establishing a call for conversation between telephone agents. The following steps respectively units are used: Generating a message record of at least a part of the conversation between the calling (Sub) telephone agent and the called telephone agents during the call, storing the message record in a database (CoDB) retrievable by request of the telephone agents, and transmitting information regarding said message record to a particular telephone agent who has requested it. Agreement to the message record should be declared by every telephone agent involved in the conversation. Furthermore, the recorded message may be transmitted to a recipient as an e-mail attachement.

## Description

Method and telephone agent system for generating a message record of at least a part of a conversation between telephone agents and for transmitting information regarding the message record to the telephone agent who has requested it

### BACKROUND OF THE INVENTION

The invention relates to a method and a telephone agent system for use in a telecommunication network in which a call for conversation established between at least one calling telephone agent and at least one called agent is switched by an telephone agent system e.g. a call center system serving a plurality of telephone agents.

At present there are call connections which are initiated respectively switched by a called operator agent using a telephone agent system which establishes a call for conversation between the calling telephone agent, e.g. a first subscriber, and the called telephone agent, e.g. a second subscriber or a service provider agent offering services to subscriber agents.
1. A first telephone agent calls one of the operator agents belonging to a telephone agent system and he/she requests for a call connection to a second telephone agent, maybe in addition to at least a third telephone agent (so called conference call).
2. A first telephone agent calls the operator agent and he/she requests for a call connection to a service provider agent offering the following information services, e.g. weather forecast, news, sport news, stock market news, traffic information, route planning information or maybe hotlines.

If the conversation held during the call with the operator agent or with the requested called telephone agent, as described before, is terminated, neither the calling telephone agent nor the operator agent involved in the conversation nor the called telephone agents involved in the conversation will be able to reproduce the whole or at least a part of the conversation among them. The facility to reproduce at least a part of the conversation between the calling telephone agent and the called telephone agent could be very helpful in the case: if the telephone agent was not able to unterstand parts of the conversation or if the content of the conversation was complicated, he/she would be pleased to follow said conversation for a second time or, if necessary, for several times.

### SUMMARY OF INVENTION

The present invention aims to provide a method and a telephone agent system for use in a telecommunication network which alleviates some or all of the above mentioned problems.

Said problems are solved by the features mentioned in the independent claims regarding a method, regarding a computer software product and regarding a system. Preferred embodiments of the invention are described in further dependent claims.
The combination of multiple dependencies among said claims is conceivable.

Accordingly, in a first aspect, the present invention provides a method for generating a message record of at least a part of the conversation held between the calling telephone agent and the called telephone agents during the call connected between them and for storing the message record in a database retrievable by request of the telephone agents. In addition, the object of this invention is the step of transmitting information regarding said message record to a particular telephone agent who has requested said message record.

In a second aspect, the present invention provides a telephone agent system which comprises a message record unit that generates a message record of at least a part of the conversation held between the calling telephone agent and the called telephone agent during the call connected between them, a database in which the message record is storable and a transmitting unit that transmits information regarding said message record to a particular telephone agent who has requested said message record.

In the case that every telephone agent involved in the conversation has previously agreed, the step or the unit that generates the message record is allowed to be started.

Use of this invention takes the advantage that telephone agents associated to a telephone agent system, preferably being customers of a call center, are able to receive the content of the conversation with the operator agent of the telephone agent system or the conversation they have had previously held with another telephone agent, preferably another customer, and which conversation as a call had been switched by the telephone agent system. In this way said telephone agents can follow the before held conversation for at least a second time.

The message record of at least a part of the conversation is especially stored in a computer sound file format. The message record in a sound file format can be in addition encoded for encryption and/or compression. The type of the sound file format can be chosen by the telephone agent or it is set as a default by the telephone agent system.

Preferably, before transmission, the message record is temporarily stored in a database which is coupled to the telephone agent system. Preferably that database is located on a file server. The temporarily storage has to be done until the particular telephone agent, who has requested the message record, has not yet received information regarding said message record.
Because of the temporary storage, space consumption in resources is reduced.

In preferred embodiments of the present invention, the call for conversation can be established among different types of telephone agents:
1. Conversation held between a subsciber agent, e.g. a customer of a call center, having a terminal set connected to the telecommunication network, and a service provider agent, offering respectively providing the following information: Weather forecast, route planning, stock market news, news, traffic information, Hotlines for customers.
2. Conversation held between a subscriber as mentioned before and an operator agent, e.g. an employee of a call center.
3. Conversation held among at least two subscriber agents who can be several calling and called subscibers, e.g. so called conference call offering services to subscriber agents.

Preferably, said information regarding said message record is transmitted via electronic mail containing the message record as an attachement having a computer sound file format.

Furthermore, a Web-server comprises said database storing the message record, wherein the information regarding the message record is transmitted via electronic mail containing a link to the Web-server.

Furthermore, a Web-server is linked to a database storing said message record, wherein the information regarding the message record is transmitted via electronic mail containing a link to the Web-server.

According to a further embodiment of the invention, after expiration of a predetermed time period said message record is removable/removed from said database after confirming removal to the telephone agent via electronic mail who has requested said message record.

The before mentioned embodiments of the invention take the advantage that in this way space consumption in resources can be reduced.

Furthermore it should be ensured that agreement respectively permission has to be declared by every telephone agent involved in the conversation before generating said message record.

Preferably, a computer software product as a computer readable medium contains said message record, wherein the message record is generated in accordance with one of the before mentioned methods.

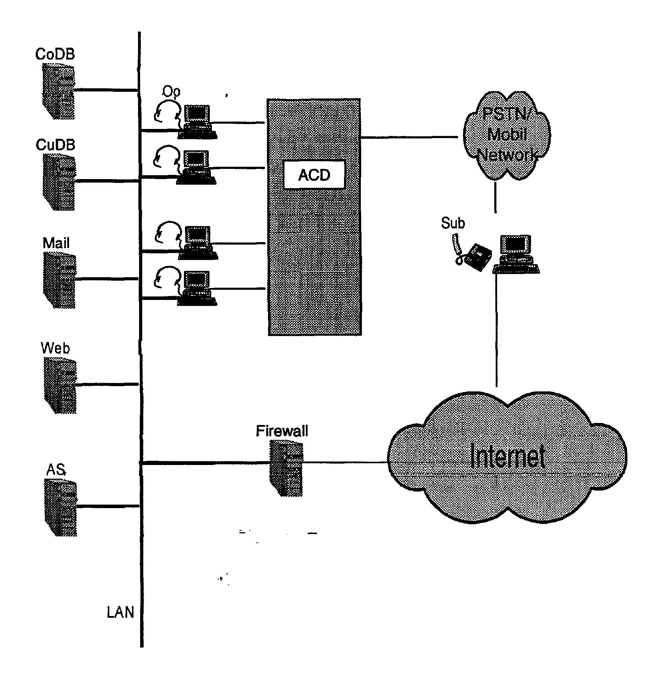

### BRIEF DESCRIPTION OF THE DRAWING

Embodiments of the present invention will now be described with reference to the accompanying drawing in which:
Figure is a schematic diagram of a part of a telecommunication network comprising a telephone agent system according to the aspects of the present invention.

### DESCRIPTION OF EMBODIMENTS OF THE INVENTION

Figure generally shows a telecommunication network comprising maybe two different types of networks, e.g. a fixed telephone switching network PSTN or a mobile radio network and a packet based network like the "Internet". Due to easier understanding, the reference PSTN means in the following both: either fixed telephone switching network or mobile radio network.

Furthermore a telephone agent system which serves at least one telephone agent, e.g. a subscriber Sub connected via terminal equipment to the network PSTN and also connected via the same or other terminal equipment to the "Internet". The terminal equipment is further coupled via a "Firewall"-Server to the "Internet" and is in addition coupled via an automatic call distribution system ACD to the network PSTN. The telephone agent system in addition comprises a local area network LAN which is connected via operator agent terminal equipment Op. The automatic call distribution system ACD is coupled to the network PSTN and via the "Firewall"-Server to the "Internet". Possibly, several servers like an application server AS, a Web-server Web, a mail server Mail, a customer database server CuDB and a conversation database server CoDB are coupled to the local area network LAN.

The following procedure concerning to the present invention is conceivable:

A first telephone agent, e.g. subscriber Sub beeing a customer of a call center which is associated to the shown telephone agent system, sets up a call to the automatic call distribution server forwarding that call to one of the terminal equipments Op belonging to an operator agent, e.g. an employee of the call center. The operator agent answers the call and puts it through to a requested second telephone agent, e.g. a subscriber, or he/she puts it through to several further telephone agents (so called conference call) respectively, maybe, to a service provider agent providing services like weather forecast, traffic information, route planning, news, sport news, stock market news, hotline services etc. The second telephone agent or agents are not shown in the figure, but their location is easily imaginable. If the first telephone agent asks the operator agent for recording the conversation held with the second telephone agent or agents, then, after putting through the call, the operator agent will ask every second telephone agent or agents involved in the conversation for their agreement respectively permission regarding the message record of said conversation. In the case that every telephone agent involved in the conversation has agreed to recording the conversation, a not shown software unit in the operator agent's terminal equipment starts generating the message record of the whole or at least a part of the conversation to that every telephone agent involved in the conversation has agreed before.

It is also possible that, instead of recording the conversation among the at least two telephone agents, the conversation between the calling telephone agent and the operator agent is recorded after agreement of both agents involved in the conversation.

The message record is stored in a database, e.g. the conversation database CoDB. The duration of the storage could be temporary. After termination of the conversation and/or of the call among the at least two telephone agents or between the calling telephone agent and the operator agent, information regarding the generated message record is transmitted to that telephone agent or agents who have requested it.

In a further embodiment of the present invention the generated message record is transmitted to said telephone agent either via electronic mail including the message record as an attachment. Due to this the customer database server CuDB has to store the electronic mail addresses of the telephone agents being customers of the mentioned telephone agent system respectively call center. To obtain information regarding the customer's electronic mail address or to obtain charging information, the unit in the operator agent's terminal equipment has to access to the customer database server CuDB.

Preferably the record message is stored in a sound file format, maybe in a encoded or compressed file format. A broad variety of well known file formats are possible. For example: Midi (.mid, that means the usual extension of the sound file), Real Audio (.ram or .ra), Wave (.wav), AVI (.avi), Mpeg1 (.mpg), Movie Mpg 4 (.avi), Quick time (.mov), MP3 (.mp3) or MP4 (.mp4) files. The format of the sound file can be chosen by request of the telephone agent or it is set as a default by the telephone agent system.

In a further embodiment of the present invention information regarding the generated message record is transmitted to said telephone agent via electronic mail including a link to an appropriate Web-Server, e.g. Web, which comprises the message record itself or which is linked to the database, e.g. CoDB, storing the message record which can be downloaded.

This embodiment aims to avoid overloading of electronic mail systems due to a large number of electronic mails containing large attached sound files, and to alleviate the risk that the electronic mail system of a customer does not accept electronic mails containing said large attached sound files.

Possible downloading mechanisms are HTTP downloading or FTP downloading.

The application server AS is responsible for a correct download process and an authorized access.

The main functions of the application server AS are:
- Session management: Conversation to record, start and stop times of the recording: Communication with the telephone agent system for getting the information regarding all the telephone agents that are participating in the call: First telephone agent, operator telephone agent(s), second telephone agent, third telephone agent, ... (in the case of conference call)
- Record process: it can be possible that the AS is recording the conversation itself. It can be also possible that this recording function is a part of the call center or it is performed by an independent application.
- Billing management: It provides the necessary information to the telephone agent system which performs billing the service.
- Downloading
- Authorisation

If the telephone agent, who has requested the conversation recording, receives an electronic mail containing a link to a Web-server, the telephone agent can download the message record by clicking to the link.

The telephone agent has maybe to enter a customer's identification code and a password before the download process will be started. If the message record is downloaded, the database, e.g. CoDB, will be able to remove the message record or it will keep it. It is also possible, that the message record is removed from the database automatically after expiration of a predetermed time period.

## Claims

1. Method for use in a telecommunication network in which a call for conversation established between at least one calling telephone agent (Sub) and at least one called telephone agent is switched by an telephone agent system which services a plurality of telephone agents (Sub), comprising the steps of:
generating a message record of at least a part of the conversation between the calling telephone agent and the called telephone agent during the call;
storing the message record in a database (CoDB) retrievable by request of the telephone agents; and
transmitting information regarding said message record to a particular telephone agent who has requested said message record.

2. Method according to claim 1, wherein agreement by every telephone agent involved in the conversation is done prior to generating said message record.

3. Method according to claim 1, further comprising the step of storing said message record in a computer sound file format.

4. Method according to claim 1, further comprising the step of encoding said message record for encryption /compression.

5. Method according to claim 1, further comprising the step of storing the message record temporarily in a database (CoDB) before transmission.

6. Method according to claim 1, wherein the conversation is established between a subscriber agent (Sub) comprising a terminal set connected to the telecommunication network and a service provider agent supporting at least one telephone agent system within the telecommunication network.

7. Method according to claim 1, wherein the conversation is established between a subscriber agent (Sub) comprising a terminal set connected to the telecommunication network and an operator agent (Op) offering services to subscriber agents.

8. Method according to claim 1, wherein the conversation is established among at least two subscriber agents each comprising a teminal set connected to the telecommunication network.

9. Method according to claim 1, further comprising the step of transmitting said information regarding said message record via electronic mail containing the message record as an attachement having a computer sound file format.

10. Method according to claim 1, wherein a Web-server (Web) comprises said database storing the message record, wherein the information regarding said message record is transmitted via electronic mail containing a link to the Web-server (Web).

11. Method according to claim 1, wherein a Web-server (Web) is linked to a database storing the message record, wherein the information regarding said message record is transmitted via electronic mail containing a link to the Web-server (Web).

12. Method according to claim 1, wherein after expiration of a predetermed time period said message record is removed from said database after confirming removal to the telephone agent via electronic mail.

13. Method according to claim 1, wherein the information regarding said message record is transmitted via electronic mail to the particular telephone agent (Sub), who has requested said message record, prior when terminating the call.

14. A computer software product wherein the message record is generated in accordance with the method of claim 1, wherein said computer software product is a computer readable medium containing said message record.

15. A telephone agent system suitable for establishing a call for conversation between at least one calling telephone agent (Sub) and at least one called telephone agent within a telecommunication network and serving a plurality of telephone agents, comprising:
a message recording unit that generates a message record of at least a part of the established conversation during the call;
a database (CoDB) in which the message record is storable,
wherein said message record is retrievable by request of the telephone agents; and
further comprising a transmitting unit that transmits information regarding said message record to a particular telephone agent who has requested said message record.

16. The system according to claim 15, wherein the record unit is receivable for a message transmitted by every telephone agent involved in the conversation in order to agree prior to generating said message record.

17. The system according to claim 15, further comprising a computer sound file that contains the message record in a computer sound file format.

18. The system according to claim 15, further comprising a computer encoded file that contains the message record in a computer encrypted / compressed format.

19. The system according to claim 15, further comprising a database (CoDB) which is connected to said system and which stores the message record temporarily before transmission.

20. The system according to claim 15, wherein the conversation is establishable between a subscriber agent (Sub) comprising a terminal set connected to the telecommunication network and a service provider agent supporting at least one telephone agent system within the telecommunication network.

21. The system according to claim 15, wherein the conversation is establishable between a subscriber agent (Sub) comprising a terminal set connected to the telecommunication network and an operator agent (Op) offering services to subscriber agents.

22. The system according to claim 15, wherein the conversation is establishable among at least two subscriber agents each comprising a teminal set connected to the telecommunication network.

23. The system according to claim 15, wherein the transmitting unit transmits said information regarding said message record via electronic mail containing the message record as an attachement having a computer sound file format.

24. The system according to claim 15, further comprising a Web-server (Web) which comprises said database storing the message record, wherein the information regarding said message record is transmittable via electronic mail containing a link to the Web-server (Web).

25. The system according to claim 15, further comprising a Web-server (Web) linked to a database which comprises said database storing the message record, wherein the information regarding said message record is transmittable via electronic mail containing a link to the Web-server (Web).

26. The system according to claim 15, wherein after expiration of a predetermed time period said message record is removable from said database after confirming removal to the telephone agent via electronic mail.

27. The system according to claim 15, wherein the transmitting unit transmits said information regarding said message record via electronic mail to the particular telephone agent (Sub), who has requested said message record, prior when terminating the call.
